# DEMANDE DE BREVET EUROPEEN

(11) **EP 1 757 395 A1**
(43) Date de publication de la demande: **28.02.2007**
(21) Numéro de dépôt: 05018632.9
(22) Date de dépôt: 26.08.2005
(51) Int. Cl.: B23H 5/02, B28D 1/00

(54) **Tête d'usinage par étincelage assisté par attaque chimique**

(71) Demandeur: ASULAB S.A., 2074 Marin (CH)
(72) Inventeur: Rey-Mermet, Gilles, 2525 Le Landeron (CH)
(74) Mandataire: Thérond, Gérard Raymond

(57) **Abrégé**

La présente invention concerne une tête d'usinage par étincelage assisté par attaque chimique, caractérisée en ce qu'elle comprend un corps (2) à travers lequel s'étend une électrode (4) et qui définit une contre-électrode (14) s'étendant radialement autour de l'électrode (4), ce corps (2) comprenant des moyens d'amenée (6) d'un liquide électrolytique dans l'espace délimité par l'électrode (4) et la contre-électrode (14).

## Description

La présente invention concerne une tête d'usinage par étincelage assisté par attaque chimique. La présente invention concerne en particulier une telle tête pour l'usinage de trous dans des matériaux non conducteurs de l'électricité tels que des plaques de verre.

C'est en 1968 que pour la première fois on a décrit l'utilisation de décharges électriques provenant d'une réaction électrochimique dans un électrolyte pour percer des trous de faibles dimensions dans des plaques de verre. Un tel procédé a connu depuis des perfectionnements. Dans sa forme actuelle, le procédé consiste à plonger la plaque de verre à usiner dans un bain électrolytique constitué, par exemple, par de la soude caustique NaOH concentrée à 30%. Une tension constante comprise typiquement entre 25V et 40V est appliquée entre l'instrument de gravure qui constitue une électrode cathodique et une contre-électrode anodique en contact avec l'électrolyte mais éloignée de la zone de travail. Des bulles d'hydrogène qui se forment au niveau de l'instrument de gravure se concentrent par coalescence et forment un film gazeux recouvrant l'électrode. Des décharges électriques apparaissant au sein de ce film érodent localement le verre.

Le procédé décrit ci-dessus présente comme inconvénient de devoir faire baigner la totalité de la surface à usiner de la pièce dans l'électrolyte. Or, un liquide comme la soude caustique est très corrosif et particulièrement dangereux notamment en cas de projection dans les yeux. Dans le cadre d'un développement industriel où des pièces de grandes dimensions et de surface étendue doivent être traitées, ce procédé nécessiterait l'utilisation de bains de grands volumes et la manipulation de grandes quantités d'électrolyte, ce qui rend la mise en oeuvre d'un tel procédé critique et dangereuse.

On connaît par le document de brevet japonais JP 92-34629 au nom de Nippon Sheet Glass Corp. Ltd, un procédé de même qu'un dispositif de perçage de trous dans une plaque de verre au moyen de décharges électrochimiques. Le dispositif comprend pour l'essentiel une électrode de travail en forme de barre rectiligne entourée par une contre-électrode en forme d'anneau posée à même la plaque de verre à usiner. Un conduit tubulaire amène l'électrolyte goutte après goutte jusque dans l'espace annulaire défini par la contre-électrode. L'excès d'électrolyte déborde par dessus le rebord de la contre-électrode et est évacué vers un réservoir sur la surface supérieure duquel est disposée la plaque de verre à usiner.

Le dispositif décrit ci-dessus permet avantageusement de ne pas devoir faire baigner la totalité de la plaque de verre à usiner dans un bain électrolytique et donc de réduire les quantités d'électrolyte utilisées. Les risques de projection d'électrolyte sont ainsi limités. Il ne s'agit toutefois que d'un dispositif expérimental difficile à transposer à une échelle industrielle. En effet, il est difficile d'imaginer comment l'ensemble formé par l'électrode et la contre-électrode pourrait être déplacé pour pouvoir usiner des trous en d'autres endroits de la plaque de verre. Inversement, on pourrait envisager de déplacer la plaque de verre en conservant l'ensemble électrode/contre-électrode fixe. Cette solution n'est pas non plus très commode car elle entraînerait des pertes d'électrolyte lors du mouvement relatif de la plaque de verre par rapport à la contre-électrode.

La présente invention a pour but de remédier aux inconvénients susmentionnés ainsi qu'à d'autres encore en procurant une tête d'usinage qui permette notamment de traiter des plaques de verre de grandes dimensions à des cadences compatibles avec les exigences industrielles tout en optimisant l'utilisation de l'électrolyte et en minimisant sa dispersion dans la zone de travail.

A cet effet, la présente invention concerne une tête d'usinage par étincelage assisté par attaque chimique, caractérisée en ce qu'elle comprend un corps à travers lequel s'étend une électrode et qui définit une contre-électrode s'étendant radialement autour de l'électrode, ce corps comprenant des moyens d'amenée d'un liquide électrolytique dans l'espace délimité par l'électrode et la contre-électrode.

Grâce à ces caractéristiques, la présente invention procure une tête d'usinage par étincelage assisté par attaque chimique formée pour l'essentiel par un corps qui est susceptible d'être déplacé selon les trois dimensions. On peut donc envisager d'usiner de grandes plaques de verre en conservant celles-ci immobiles et en déplaçant uniquement avec précision la tête d'usinage, ce qui confère à la tête d'usinage selon l'invention une grande souplesse d'emploi. Par ailleurs, le liquide électrolytique est confiné dans le volume délimité par la contre-électrode qui s'étend radialement autour de l'électrode, de sorte que les quantités d'électrolyte utilisées sont faibles et que les risques de projection dudit électrolyte sont diminués.

Selon une caractéristique complémentaire de l'invention, la tête d'usinage comprend également des moyens d'évacuation du liquide électrolytique après utilisation.

Cette caractéristique permet de garantir un fonctionnement encore plus sûr de la tête d'usinage selon l'invention dans la mesure où le liquide électrolytique est évacué immédiatement après utilisation. Tout risque de contact avec le liquide électrolytique est ainsi évité. Par ailleurs, la circulation forcée de l'électrolyte entraîne un renouvellement permanent de celui-ci au niveau de la zone de travail et assure ainsi une excellente stabilité des paramètres physico-chimiques du procédé d'usinage par étincelage.

Selon une autre caractéristique de l'invention, le débit d'évacuation de l'électrolyte est supérieur au débit d'amenée de ce même électrolyte.

Il est donc possible d'évacuer, outre l'électrolyte utilisé, les gaz produits par le procédé d'usinage. En outre, si la plaque de verre à usiner est baignée dans de l'eau, l'eau présente au voisinage de la zone de travail sera évacuée en même temps que l'électrolyte utilisé, de sorte que l'eau du bain restera constamment propre.

Selon un mode préféré de réalisation de l'invention, la contre-électrode se présente sous la forme d'une pièce de révolution disposée autour de l'électrode, une dernière pièce extérieure assurant le confinement du liquide électrolytique lors de son extraction et étant dépourvue de fonction électrique.

Dans la tête d'usinage selon l'invention, l'électrolyte n'est présent qu'à proximité immédiate de la zone de travail définie par l'extrémité de l'électrode en regard de la plaque de verre à usiner. Il faut donc que la contre-électrode se trouve à proximité de l'électrode de travail, faute de quoi elle ne pourrait assurer sa fonction électrochimique. Ainsi, de par sa forme de révolution, la contre-électrode est très proche de l'électrode et assure aussi une fonction de confinement et de contrôle du flux de liquide électrolytique autour de la zone de travail.

D'autres caractéristiques et avantages de la présente invention ressortiront plus clairement de la description détaillée qui suit d'un mode de réalisation de la tête d'usinage selon l'invention, cet exemple étant donné à titre purement illustratif et non limitatif seulement en liaison avec le dessin annexé sur lequel :
- la figure 1 est une vue en perspective selon un premier angle de la tête d'usinage selon l'invention;
- la figure 2 est une vue en perspective selon un second angle différent du premier de la tête d'usinage selon l'invention;
- la figure 3 est une vue en perspective et en éclaté de la tête d'usinage selon l'invention;
- la figure 4 est une vue en élévation de la tête d'usinage selon l'invention;
- la figure 5 est une vue de dessus de la tête d'usinage représentée à la figure 4;
- la figure 6 est une vue en coupe de la tête d'usinage selon l'invention;
- la figure 7 est une autre vue en perspective de la tête d'usinage selon l'invention;
- la figure 8 est une représentation schématique de la tête d'usinage reliée à une pompe et à un ordinateur de commande et de contrôle, et
- les figures 9A à 9C représentent différents modes de réalisation de l'électrode de travail.

La présente invention procède de l'idée générale inventive qui consiste à procurer une tête d'usinage par étincelage assisté par attaque chimique pouvant être déplacée dans les trois dimensions, ce qui permet d'usiner de grandes plaques de verre aisément et avec précision et à des cadences compatibles avec une production à l'échelle industrielle. En outre, dans la variante d'exécution préférée de l'invention, la tête d'usinage est munie de moyens d'amenée et d'évacuation du liquide électrolytique, ce qui permet de réduire les quantités d'électrolyte utilisées et d'éviter tout risque de projection de cet électrolyte.

La présente invention va être décrite en liaison avec l'usinage de trous dans des plaques de verre. Il va de soi que l'invention n'est pas limitée à un tel matériau et qu'elle peut s'appliquer au perçage de trous dans tous types de matériaux non conducteurs de l'électricité tels que les matériaux plastiques, les céramiques ou encore les matériaux semi-conducteurs.

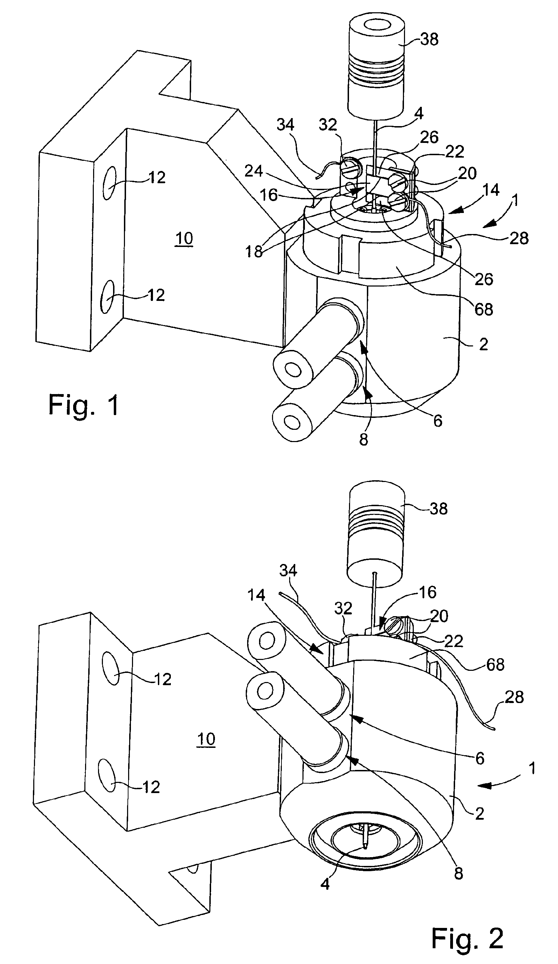

En liaison avec les figures 1 et 2 annexées, on voit une tête d'usinage conforme à la présente invention et désignée dans son ensemble par la référence numérique générale 1. Cette tête d'usinage 1 comprend un corps 2 au travers duquel s'étend une électrode de travail 4. Le corps 2 est muni de moyens d'amenée 6 et de moyens d'évacuation 8 d'un fluide électrolytique tel que de la soude caustique NaOH. Le corps 2 de la tête d'usinage 1 est relié au bâti d'une machine trois-axes (non représentée) par le biais d'une équerre de fixation 10. A cet effet, l'équerre de fixation 10 comprend des trous traversants 12 pour son montage par vissage.

Selon une variante d'exécution simplifiée de l'invention, le corps 2 constitue la contre-électrode anodique de la tête d'usinage 1 selon l'invention.

Selon la variante d'exécution préférée de l'invention, la contre-électrode est une pièce de révolution 14 qui se présente sous la forme d'un cylindre creux. Elle est distincte du corps 2 dans lequel elle est engagée et est disposée radialement autour de l'électrode de travail 4. A son sommet, la contre-électrode 14 est partiellement tronquée pour permettre son raccordement électrique à une source de tension.

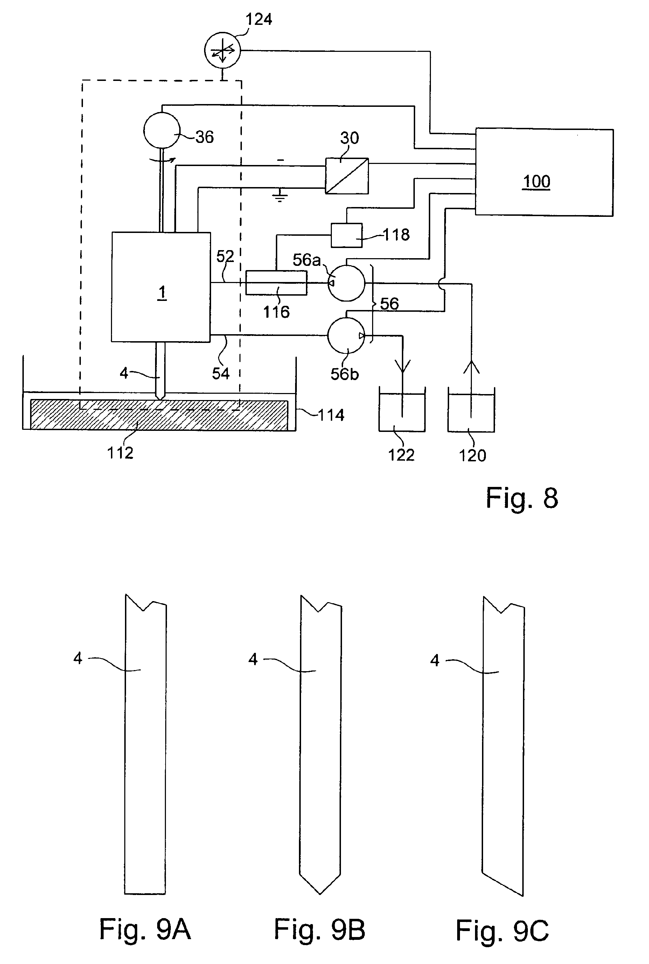

Comme on le verra ci-après, l'électrode de travail 4 doit pouvoir tourner sur elle-même tout en étant raccordée électriquement à la même source de tension que la contre-électrode 14. A cet effet, une solution simple consiste à prévoir une lame de contact 16 présentant deux fentes rectilignes 18 et montée sur la contre-électrode 14, par exemple par vissage au moyen de vis 20. Une plaquette isolante 22 est disposée entre la lame de contact 16 et la contre-électrode 14 pour éviter tout court-circuit entre ces deux pièces. Les deux fentes rectilignes 18 pratiquées dans la lame de contact 16 scindent cette dernière en trois branches dont la branche médiane 24 est plus large que les deux branches d'extrémité 26. L'électrode de travail 4 qui se présente sous la forme d'une tige rectiligne est passée par dessus les branches d'extrémité 26 et sous la branche médiane 24 de la lame de contact 16 de façon à assurer un léger pincement et un contact électrique par frottement entre ladite électrode 4 et ladite lame de contact 16. Les vis 20 qui servent à la fixation de la lame de contact 16 sur la contre-électrode 14 peuvent également servir à la fixation d'un fil de liaison électrique 28 pour le raccordement de l'électrode de travail 4 à une source d'alimentation électrique 30 (voir figure 8).

De même, une vis 32 vissée directement dans la contre-électrode 14 peut servir au raccordement de cette dernière à la source d'alimentation 30 par le biais d'un fil électrique 34.

Enfin, l'électrode de travail 4 peut être entraînée en rotation par le biais d'un moteur 36 (voir figure 8) grâce à une pièce d'accouplement 38.

L'électrode de travail 4 est une tige rectiligne cylindrique qui peut être réalisée, par exemple, en acier inoxydable ou encore en tungstène. Ce dernier matériau a pour avantage d'être excellent conducteur de l'électricité, de présenter une température de fusion élevée et d'avoir une bonne résistance chimique. Le diamètre de l'électrode de travail 4 est avantageusement compris entre 0,1 mm et 1 mm. Quant à la contre-électrode 14, elle est par exemple réalisée en acier nickelé pour résister à la corrosion.

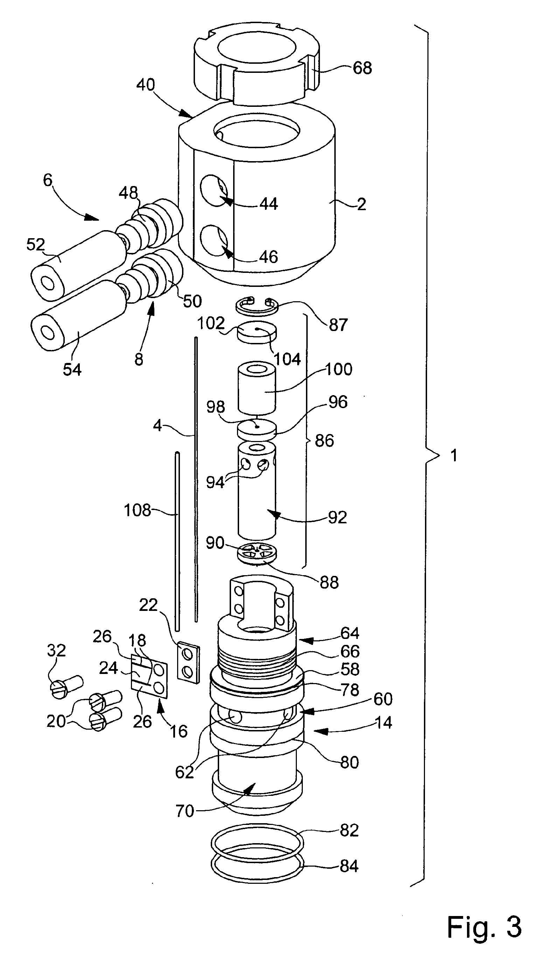

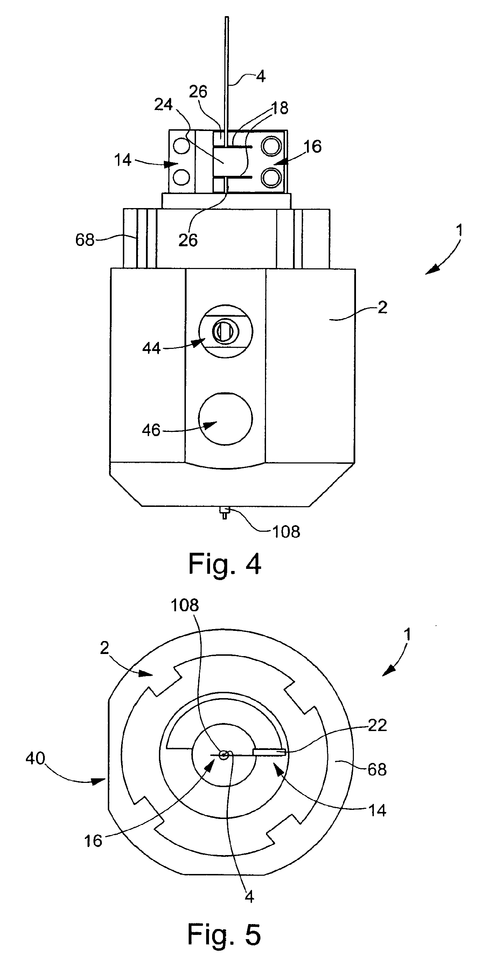

On s'intéresse maintenant au détail de la structure de la tête d'usinage 1 selon l'invention en liaison avec les figures 3 à 7.

Le corps 2 de la tête d'usinage 1 est une pièce creuse sensiblement cylindrique présentant un méplat 40 pour le montage de l'équerre de fixation 10. A cet effet, le méplat 40 présente deux trous 42 pour le montage par vissage de ladite équerre 10. Le corps 2 est percé de deux trous 44 et 46 qui débouchent dans son volume intérieur et qui servent au montage de deux prises 48 et 50 sur lesquelles sont fixés respectivement un conduit d'amenée 52 et un conduit d'évacuation 54 du liquide électrolytique. Ces conduits 52 et 54 sont raccordés à une pompe 56 comme il sera décrit en détail ci-après en liaison avec la figure 8.

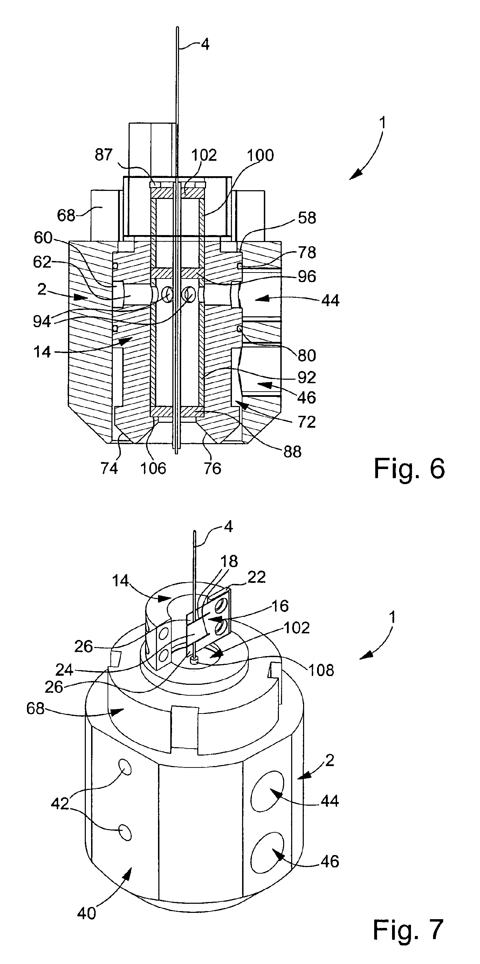

Le corps 2 est engagé axialement sur la contre-électrode 14 qui est elle aussi une pièce creuse sensiblement cylindrique. Le corps 2 est immobilisé axialement sur la contre-électrode 14 en venant buter contre un épaulement annulaire 58 prévu vers l'extrémité supérieure de la contre-électrode 14 (voir figure 6). La contre-électrode 14 présente en un endroit de sa hauteur une gorge circulaire 60 au niveau de laquelle est pratiqué un, et préférentiellement plusieurs trous traversants 62 régulièrement espacés qui débouchent dans le volume intérieur de ladite contre-électrode 14. Ces trous traversants 62 sont prévus à une hauteur telle que, lorsque le corps 2 est immobilisé axialement sur la contre-électrode 14, le trou 44 pratiqué dans ledit corps 2 et par lequel arrive le liquide électrolytique se trouve au même niveau que lesdits trous traversants 62. Le liquide électrolytique peut ainsi circuler le long de la gorge circulaire 60 et pénétrer via la pluralité de trous traversants 62 dans le volume intérieur de la contre-électrode 14. La pluralité de trous traversant 62 permet ainsi une meilleure circulation de l'électrolyte. Par ailleurs, il n'est pas nécessaire d'indexer la position de la contre-électrode 14 à l'intérieur du corps 2 pour s'assurer que le trou 44 d'amenée de l'électrolyte soit en regard d'un trou 62 unique qui serait usiné dans la contre-électrode 14.

La contre-électrode 14 est plus haute que le corps 2. La partie 64 de la contre-électrode 14 qui fait saillie du corps 2 peut présenter un filetage extérieur 66 pour le vissage d'un écrou de blocage 68 qui force le corps 2 contre la contre-électrode 14 et l'immobilise.

Vers sa base, la contre-électrode 14 présente un rétrécissement de diamètre 70 qui définit avec la paroi intérieure du corps 2 une chambre annulaire 72 en communication avec le trou 46 ménagé à travers l'épaisseur dudit corps 2 pour l'évacuation du liquide électrolytique.

A sa base, la contre-électrode 14 présente un rebord circulaire 74 incliné vers l'extérieur et un rebord circulaire 76 incliné vers l'intérieur. Dans sa forme d'exécution simplifiée, le rebord circulaire de la contre-électrode 14 pourrait être plan. Néanmoins, l'évacuation par aspiration du liquide électrolytique serait rendue plus difficile. C'est pourquoi il est prévu le rebord incliné extérieur 74 qui permet de dégager un espace plus grand pour le passage de l'électrolyte. De même, il est prévu que le rebord intérieur 76 soit également incliné afin d'offrir aux lignes de champ électrique qui s'instaurent entre l'électrode 4 et la contre-électrode 14 une surface aussi grande que possible sur laquelle se répartir pour éviter les phénomènes de pointe. On veut en effet empêcher une concentration excessive des lignes de champ au niveau de la contre-électrode où pourrait se produire la réaction électrochimique d'étincelage.

Enfin, la contre-électrode 4 présente deux rainures circulaires 78 et 80 dans lesquelles sont logés deux joints d'étanchéité 82 et 84. Ces deux joints 82 et 84 ont pour fonction d'empêcher que le liquide électrolytique qui arrive par le trou d'amenée 44 ne monte, respectivement ne descende à l'intérieur de la tête d'usinage 1.

II peut être difficile d'usiner dans la contre-électrode 14 un trou long et de faible diamètre pour l'insertion de la contre-électrode 4. C'est pourquoi on usinera préférentiellement dans la contre-électrode 14 un trou de plus grand diamètre dans lequel un ensemble de guidage 86 de l'électrode 4 sera introduit axialement. L'ensemble de guidage 86 se compose successivement et de bas en haut d'un disque de base 88 ajouré par lequel le liquide électrolytique peut s'échapper et au centre duquel est prévu un trou 90 pour le passage de l'électrode 4, d'un premier tube intermédiaire 92 qui sert d'entretoise et qui présente, en un endroit de sa hauteur, une pluralité de trous traversants 94 en regard des trous 62 de la contre-électrode 14 et du trou 44 du corps 2 pour le passage de l'électrolyte, d'une cale circulaire intermédiaire 96 percée seulement d'un trou central 98 pour le passage et le guidage de l'électrode 4 et qui empêche donc le liquide électrolytique de remonter, d'un second tube intermédiaire 100 qui sert uniquement d'entretoise, et d'une cale circulaire supérieure 102 percée seulement d'un trou central 104 pour le guidage de l'électrode 4. L'ensemble de guidage 86 est bloqué axialement à l'intérieur de la contre-électrode 14 par son disque de base 88 qui vient en appui contre un épaulement 106 ménagé à la base de la surface intérieure de ladite contre-électrode 14 et par un anneau élastique 87 qui vient se loger dans une rainure circulaire pratiquée dans la paroi intérieure de la contre-électrode 14.

Finalement, l'électrode 4 est introduite axialement à l'intérieur de l'ensemble de guidage 86. L'électrode 4 s'étend ainsi concentriquement à l'intérieur de l'ensemble de guidage 86 qui lui-même s'étend concentriquement à l'intérieur de la contre-électrode 14 qui elle-même s'étend concentriquement à l'intérieur du corps 2.

Selon un mode préféré de réalisation de l'invention, on isole l'électrode de travail 4 de l'électrolyte en l'introduisant dans un manchon 108 réalisé en un matériau non conducteur tel que du verre et on expose l'électrode 4 seulement dans sa partie terminale à proximité immédiate de la zone d'usinage. En procédant ainsi, on garantit que le rapport entre la surface de l'électrode de travail 4 au contact de l'électrolyte et la surface de la contre-électrode 14 au contact de ce même électrolyte est suffisamment faible, typiquement de l'ordre de 1:100, pour que la tête d'usinage 1 selon l'invention puisse être réalisée selon des dimensions suffisamment petites. D'autres méthodes pour isoler l'électrode de travail 4 du liquide électrolytique sont envisageables. On peut, par exemple, déposer un revêtement électriquement non conducteur et résistant aux attaques chimiques tel que du téflon® directement sur l'électrode 4. L'électrode 4 ainsi revêtue pourra ensuite être introduite dans un tube métallique.

La figure 8 est une représentation schématique de la tête d'usinage 1 reliée à la pompe 56 et à un ordinateur de contrôle et de commande 110. La plaque de verre 112 à usiner est disposée dans un bac de travail 114 qui peut être avantageusement rempli d'eau. La source d'alimentation électrique 30 applique une différence de potentiel entre l'électrode 4 et la contre-électrode 14. Avantageusement, la contre-électrode 14 est reliée à la masse et la différence de potentiel entre l'électrode anodique 4 et la contre-électrode cathodique 14 est d'environ -30V. Il peut être prévu deux pompes distinctes, l'une pour amener le liquide électrolytique à la tête d'usinage 1 et l'autre pour évacuer l'électrolyte utilisé. Toutefois, de manière préférée, on utilisera une pompe péristaltique unique 56 comprenant deux étages 56a et 56b reliés respectivement au conduit d'amenée 52 et au conduit d'évacuation 54 du liquide électrolytique.

L'usinage est plus rapide lorsque le liquide électrolytique est préalablement chauffé. En effet, le début de l'usinage peut être retardé de plusieurs dizaines de secondes lorsque l'électrolyte est froid, ce qui pose d'évidents problèmes dans le cas d'une utilisation industrielle de la tête d'usinage 1 selon l'invention. La tête d'usinage 1 peut être facilement adaptée de manière à amener de l'électrolyte préalablement chauffé directement dans la tête d'usinage 1. Soit on prévoit un corps de chauffe directement intégré dans la tête d'usinage 1 soit, comme représenté sur la figure 8, on prévoit un corps de chauffe 116 extérieur à la tête d'usinage 1 mais disposé à proximité de celle-ci, sur le conduit d'amenée 52 de l'électrolyte, pour éviter les pertes thermiques entre l'endroit où ledit électrolyte est chauffé et la zone de travail. Le corps de chauffe 116 est relié à une alimentation de puissance 118 régulée par l'ordinateur 100. Pour la régulation de la température de l'électrolyte, un capteur thermique peut être avantageusement disposé dans la tête d'usinage 1.

L'étage 56a de la pompe péristaltique 54 prélève le fluide électrolytique dans un réservoir 120 tandis que l'étage 56b de ladite pompe 56 évacue l'électrolyte utilisé vers un réservoir 122.

Le moteur 36, commandé par l'ordinateur 100, entraîne l'électrode de travail 4 en rotation. Cet entraînement en rotation assure un usinage plus régulier et une meilleure circulation de l'électrolyte dans la région de la zone de travail. Enfin, l'ensemble de la tête d'usinage 1 qui est inscrite dans un rectangle représenté en pointillés sur la figure 8 peut être déplacé dans les trois dimensions au moyen d'une machine trois axes 124 également contrôlée par l'ordinateur 100. Avantageusement, l'électrode 4 et son manchon de verre 108 peuvent se rétracter à l'intérieur de la tête d'usinage 1. Ceci permet de ne pas casser ladite électrode 4 et son manchon 108 au cas où la descente de la tête d'usinage serait trop rapide. On peut également envisager de mesurer le déplacement ou la force exercée sur l'ensemble formé par l'électrode 4 et son manchon 108 à l'intérieur de la tête d'usinage 1 afin d'adapter la vitesse de descente de cette dernière à la vitesse de perçage du trou.

Le débit d'évacuation de l'électrolyte utilisé peut être supérieur au débit d'amenée de ce même électrolyte au niveau de la zone de travail. Cette différence de débit peut être obtenue en choisissant des conduits d'amenée 52 et d'évacuation 54 de l'électrolyte de diamètres différents. On assure ainsi l'évacuation des gaz générés par le processus d'usinage et on garantit que l'eau dans laquelle baigne la plaque de verre à usiner reste propre, dans la mesure où, en plus de l'électrolyte utilisé, on évacue une faible quantité d'eau polluée.

Trois variantes de réalisation de l'extrémité de l'électrode de travail 4 peuvent être envisagées. Selon la première variante illustrée à la figure 9A, l'électrode 4 présente une extrémité plane. Une telle géométrie permet de garantir que le fond du trou usiné sera plat. Elle n'est toutefois pas optimale du point de vue de la concentration des lignes de champ. On remédie à ce problème avec la variante illustrée à la figure 9B dans laquelle l'extrémité de l'électrode de travail 4 est taillée en pointe. On concentre les lignes de champ par effet de pointe. Néanmoins, le fond du trou usiné présentera une forme en cône complémentaire de celle de l'extrémité de l'électrode 4. Une troisième variante illustrée à la figure 9C prévoit de biseauter l'extrémité de l'électrode de travail. On combine avantageusement l'effet de pointe qui permet de concentrer les lignes de champ et la possibilité d'obtenir un trou à fond plat lorsque l'électrode 4 est entraînée en rotation.

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées. En particulier, il peut être envisagé d'introduire un élément du type crayon chauffant dans le corps 2 ou dans la contre-électrode 14. Une autre solution consisterait à placer le corps de chauffe dans l'espace compris entre le manchon 108 et le tube 92, en prévoyant des passages étanches dans les disques 96 et 102. Une autre solution encore consisterait à placer un corps de chauffe tout autour du corps 2.

## Revendications

1. Tête d'usinage par étincelage assisté par attaque chimique, **caractérisée en ce qu'**elle comprend un corps (2) à travers lequel s'étend une électrode (4) et qui définit une contre-électrode (14) s'étendant radialement autour de l'électrode (4), ce corps (2) comprenant des moyens d'amenée (6) d'un liquide électrolytique dans l'espace délimité par l'électrode (4) et la contre-électrode (14).

2. Tête d'usinage par étincelage assisté par attaque chimique, **caractérisée en ce qu'**elle comprend une contre-électrode (14) disposée radialement autour d'une électrode (4) et engagée axialement à l'intérieur d'un corps (2), ce corps (2) comprenant des moyens d'amenée (6) d'un liquide électrolytique dans l'espace délimité par l'électrode (4) et la contre-électrode (14).

3. Tête d'usinage selon l'une quelconque des revendications 1 ou 2, **caractérisée en ce qu'**elle comprend également des moyens d'évacuation (6) du liquide électrolytique après utilisation.

4. Tête d'usinage selon la revendication 3, **caractérisée en ce que** le débit d'évacuation de l'électrolyte est supérieur au débit d'amenée de ce même électrolyte.

5. Tête d'usinage selon l'une quelconque des revendications 1 à 4, **caractérisée en ce qu'**un ensemble de guidage (86) de l'électrode (4) est introduit axialement dans la contre-électrode (14).

6. Tête d'usinage selon la revendication 5, **caractérisée en ce qu'**au moins un trou traversant (44) d'amenée du liquide électrolytique est percé dans le corps (2), ce trou (44) communiquant avec au moins un trou traversant (62) pratiqué dans la contre-électrode (14) qui lui-même communique avec au moins un trou traversant (94) pratiqué dans l'ensemble de guidage (86) de l'électrode (4).

7. Tête d'usinage selon la revendication 6, **caractérisée en ce qu'**un second trou (46) pour l'évacuation du liquide électrolytique est percé dans le corps (2), ce trou (46) communiquant avec un espace annulaire (72) délimité par ledit corps (2) et la contre-électrode (14).

8. Tête d'usinage selon l'une quelconque des revendications 6 ou 7, **caractérisée en ce que** l'ensemble de guidage (86) comprend au moins un disque de base (88) ajouré et présentant en son centre un trou (90) pour le passage de l'électrode (4) et une cale intermédiaire (96) percée seulement d'un trou central (98) pour le passage et le guidage de l'électrode (4), un tube intermédiaire (92) dans lequel est percé le au moins un trou traversant (94) étant disposé entre le disque de base (88) et la cale intermédiaire (96).

9. Tête d'usinage selon l'une quelconque des revendications 1 à 8, **caractérisée en ce que** l'électrode (4) est une tige cylindrique.

10. Tête d'usinage selon la revendication 9, **caractérisée en ce que** l'extrémité de l'électrode (4) est plane, taillée en pointe ou en biseau.

11. Tête d'usinage selon l'une quelconque des revendications 9 ou 10, **caractérisée en ce que** le diamètre de l'électrode (4) est compris entre 0,1 mm et 1 mm.

12. Tête d'usinage selon l'une quelconque des revendications 9 à 11, **caractérisée en ce que** l'électrode (4) est isolée de manière à n'être au contact de l'électrolyte que dans sa partie terminale inférieure.

13. Tête d'usinage selon la revendication 12, **caractérisée en ce que** l'électrode (4) est introduite dans un manchon électriquement isolant (108).

14. Tête d'usinage selon la revendication 12, **caractérisée en ce que** l'électrode (4) est recouverte d'un revêtement électriquement non conducteur et résistant aux attaques du produit électrolytique.

15. Tête d'usinage selon la revendication 13, **caractérisée en ce qu'**elle est en outre introduite dans un tube métallique.

16. Tête d'usinage selon l'une quelconque des revendications 9 à 15, **caractérisée en ce que** l'électrode (4) est réalisée en acier inoxydable ou en tungstène.

17. Tête d'usinage selon l'une quelconque des revendications 1 à 16, **caractérisée en ce qu'**elle comprend des moyens de chauffage de l'électrolyte préalablement à son utilisation.

18. Tête d'usinage selon l'une quelconque des revendications 1 à 16, **caractérisée en ce qu'**un corps de chauffe (116) est disposé sur un conduit d'amenée (52) de l'électrolyte vers la tête d'usinage (2).

19. Tête d'usinage selon l'une quelconque des revendications 1 à 18, **caractérisée en ce que** la contre-électrode (14) présente à sa base un rebord circulaire (76) incliné vers l'intérieur.

20. Tête d'usinage selon la revendication 19, **caractérisée en ce que** la contre-électrode (4) présente en outre à sa base un rebord circulaire (74) incliné vers l'extérieur.

21. Tête d'usinage selon l'une quelconque des revendications 1 à 20, **caractérisée en ce qu'**elle comprend deux conduits d'amenée (52) et d'évacuation (54) de l'électrolyte, ces deux conduits (52, 54) étant raccordés à une première extrémité aux trous traversants (44, 46) et à une seconde extrémité aux deux étages (56a) et (56b) d'une pompe péristaltique (56).

22. Tête d'usinage selon l'une quelconque des revendications 1 à 21, **caractérisée en ce que** l'électrode (4) est entraînée en rotation.

23. Tête d'usinage selon l'une quelconque des revendications 1 à 22, **caractérisée en ce que** l'électrode (4) est susceptible de se déplacer axialement.

24. Tête d'usinage selon la revendication 23, **caractérisée en ce qu'**elle comprend des moyens pour la mesure du déplacement axial ou de la force exercée sur l'électrode (4).
